# EUROPÄISCHE PATENTANMELDUNG

(11) **EP 1 820 563 A1**
(43) Veröffentlichungstag der Anmeldung: **22.08.2007**
(21) Anmeldenummer: 07102507.6
(22) Anmeldetag: 15.02.2007
(51) Int. Cl.: B01D 61/20, B01D 65/08, C02F 1/44, C02F 3/12

(54) **Filter, Umbausatz für einen Filter und Verfahren zum Filtern von Flüssigkeiten**

(30) Priorität: 20.02.2006 DE 102006007878; 17.03.2006 DE 102006012462
(71) Anmelder: ACO SEVERIN AHLMANN GMBH & CO. KG, D-24768 Rendsburg (DE)
(72) Erfinder: Braun, Karsten, 36433 Bad Salzungen (DE); Blaurock, Harry, 36269 Philippsthal/Unterneurode (DE); Paluchowski, Dariusz, 54295 Trier (DE); Unger, Jochem, 64739 Mümling-Grumbach (DE); Schmitt, Wälti, 65307 Bad Schwalbach (DE)
(74) Vertreter: Bohnenberger, Johannes

(57) **Zusammenfassung**

Die Erfindung betrifft einen Filter, einen Umbausatz für einen Filter und ein Verfahren zum Filtern von Flüssigkeiten. Bei der Aufbereitung von Industrieabwässern finden häufig Membranverfahren und Membranbelebungsverfahren Anwendung. Für eine effiziente Filterung ist es jedoch nötig, einem Verschmutzen der Membranmodule vorzubeugen und entgegen zu wirken. Hierfür stellt die vorliegende Erfindung ein Verfahren und eine Vorrichtung bereit, bei der Druckluft so in einen abgeschlossenen Bereich der Filtermembran eingeblasen wird, dass durch den Druck der durch Filtermembran austretenden Luft eine Reinigung der Filtermembran gewährleistet wird.

## Beschreibung

Die Erfindung betrifft einen Filter, einen Umbausatz für einen Filter und ein Verfahren zum Filtern von Flüssigkeiten gemäß dem Oberbegriff des Patentanspruch 1 bzw. 14 bzw. 17.

Bei der Aufbereitung von Abwässern, insbesondere Industrieabwässern, finden häufig Membranverfahren bzw. Membranbelebungsverfahren Anwendung. Eine Membran-Belebungsanlage besteht üblicherweise aus einem Belebungsbecken, in dem mittels belebten Schlamms die biologische Behandlung des Abwassers durchgeführt wird, und der Filtrationseinheit bzw. der Filter, in der bzw. dem mittels den in dieses Modul eingebauten Filtermembranen der belebte Schlamm zurückgehalten und ein feststofffreier Ablauf ermöglicht wird.

Es ist eine Reihe von verschiedenen Filtermembranen und Filtereinheiten am Markt, die sich hinsichtlich der Konstruktion, der Trenngrenze (Mikro- oder Ultrahydrationsmembran), des Membranen-Aufbaus (Schlauch-, Rohr- und Kapillarmembranen), der Filtrationsrichtung (von innen nach außen oder umgekehrt), des Aufstellungsortes (trocken aufgestellte und getauchte Systeme) und der Betriebsweise unterscheidenden.

All diesen Modulen ist jedoch ein Problem gemein. Aufgrund des hohen Durchflusses von verunreinigter Flüssigkeit (hier häufig mit hohem Feststoffgehalt) bzw. Abwasser, kommt es zu einer Verlegung bzw. Verstopfung der Filtermembran bzw. Filtermembranen. Es ist bekannt, einer derartigen Verschmutzung der Filtermembranen vorzubeugen, indem Luft bzw. Gas im Bodenbereich der Filtermembran so eingebracht wird, dass die Luftbläschen entlang der Filtermembranen aufsteigen. Auf den Membranoberflächen bilden sich unzählige kleine Wirbel, die ein Anhaften bzw. Anlagern von Schmutzpartikeln an den Membranoberflächen verhindern und Druckunterschiede erzeugen, die bereits anhaftende Partikel lösen. Auch trägt eine derartige Belüftung der Membranen dazu bei, eine Querströmung entlang der Filtermembranen zu erzeugen, wodurch das Anlagern von Verschmutzungen, insbesondere von Feststoffen unterbunden wird. Diese Bewegung kann beispielsweise durch eine intermittierende Belüftung mit hohem Druck noch unterstützt werden.

Dennoch kommt es bei längerem Betrieb einer Filtereinheit zu einer Verschmutzung der Filtermembran, die in einer geringeren Permeabilität und somit Effizienz der Filtermembran bzw. der gesamten Filtereinheit resultiert. Die Ursachen der Verschmutzung liegen konkret in der Ablagerung von organischen und anorganischen Partikeln, der Ablagerung und dem Ausfällen von Salzen, der Ablagerung von organischen Makromolekülen und dem Biofouling, d.h. Penetration und Aufwuchs von Mikroorganismen und/oder deren Ausscheidungen wie Enzyme.

Um diesen Phänomenen entgegen zu wirken, werden in der Praxis zusätzlich Spülungen bzw. Rückspülungen vorgenommen. Bei einer Rückspülung wird Flüssigkeit in umgedrehter Richtung durch die Filtermembran getrieben, um mögliche Rückstände zu lösen. Diese Rückstände werden dann über einen weiteren Ablauf abgeführt. Beispielsweise kann mittels einer Pumpe die Strömungsrichtung kurzfristig umgedreht werden, so dass das Filtrat wieder durch die Filtermembran gedrückt wird. Diese Rückspülungen senken die Effizienz einer Filtereinheit. Häufig werden bei den Rückspülungen zusätzlich chemische und/oder biologische Stoffe zugeführt (z.B. Zitronensäure oder oxydierende Chemikalien), deren Entsorgung die Effizienz und die Qualität der Filtereinheit weiter senken.

Ausgehend von diesem Stand der Technik ist es Aufgabe der vorliegenden Erfindung, einen Filter bzw. einen Umbausatz für einen Filter und ein Verfahren zum Filtern von Flüssigkeiten bereit zu stellen, der bzw. das eine effiziente und umweltverträgliche Filtration von Flüssigkeit gewährleistet.

Diese Aufgabe wird erfindungsgemäß durch einen Filter nach dem Anspruch 1 bzw. einen Umbausatz gemäß Anspruch 14 bzw. ein Verfahren gemäß Anspruch 19 gelöst.

Insbesondere wird die Aufgabe durch einen Filter gelöst, der eine Filtermembran, einen Flüssigkeitszulauf zum Einbringen von Flüssigkeit in den Filter, einen Filterablauf zum Abführen der durch die Filtermembran gereinigten Flüssigkeit und eine Druckluftquelle umfasst, bei dem die Filtermembran zwischen Flüssigkeitszulauf und Filterablauf angeordnet ist und einen ersten Bereich zwischen dem Flüssigkeitszulauf und der Filtermembran sowie einen zweiten Bereich zwischen dem Filterablauf und der Filtermembran definiert, wobei die Druckluftquelle derart mit dem zweiten Bereich verbunden ist, dass Druckluft zur Reinigung der Filtermembran in den zweiten Bereich einbringbar ist.

Ein wesentlicher Punkt der Erfindung besteht darin, dass Druckluft in den zweiten Bereich, also den Bereich, in dem sich üblicherweise das Filtrat befindet, eingeblasen wird und aufgrund des Dichte- bzw. Druckunterschieds zwischen Gas und Flüssigkeit, durch die Membran dringt und diese von Rückständen reinigt. Theoretisch ist es möglich, als Druckluft jedes beliebige Gas zu verwenden. Somit könnte auch ein Gas verwendet werden, das in der Filtermembran eine besondere reinigende Wirkung zeigt. Vorzugsweise wird Luft verwendet.

Vorzugsweise weist der Filterablauf einen Anschluss, insbesondere ein Ventil, zum Einbringen der Luft bzw. des Gases in den zweiten Bereich auf. Der Filter muss so mit keinen weiteren Öffnungen versehen werden, und bestehende Filtergehäuse können weiter verwendet werden.

Vorzugsweise umfasst der Filter eine Heizung, die der Filtermembran benachbart angeordnet ist. Durch das permanente oder intervallweise Beheizen der Filtermembran können Bakterien in dieser abgetötet und Fette gelöst werden. Dies ist besonders vorteilhaft möglich, wenn das Beheizen und das Einblasen von Luft in den zweiten Bereich sehr zeitnahe geschieht.

Vorzugsweise umfasst die Heizung einen Heizstab, und die Filtermembran ist im Wesentlichen dem Heizstab umgebend, insbesondere zylindrisch, ausgebildet. Zum einen gilt es festzustellen, dass für viele Filteranlagen bzw. Filtereinheiten eine zylindrische Filtermembran bevorzugt verwendet wird, zum anderen werden durch die Verwendung eines Heizstabs und die zylindrische Ausbildung der Filtermembran ein gleichmäßiges Erhitzen der Filtermembran gewährleistet. Dies ist besonders wichtig, da bei belebten Systemen genau so viel Wärme zugeführt werden darf, dass Bakterien oder Fette, die sich in der Filtermembran angelagert haben, gelöst werden. Wird zuviel Wärmeenergie aufgebracht, heizt sich der erste Bereich auf, wodurch dort angesiedelte Mikroorganismen vernichtet werden.

Vorzugsweise umfasst der Filter eine im Wesentlichen bis auf den Filterablauf geschlossene Filterkerze zur Aufnahme der Filtermembran im Innenraum des Filters. Somit hat der zweite Bereich, bis auf die Membranöffnungen, genau eine Öffnung, nämlich den Filterablauf. Wird Druckluft in den zweiten Bereich eingepumpt, so kann diese lediglich durch die Filtermembran entweichen und somit ihre Reinigungsfunktion optimal erfüllen.

Vorzugsweise umfasst der Filter einen Belüftungsring, der zum Anströmen der Filtermembran, insbesondere einer Membranaußenwand, mit Luft im ersten Bereich angeordnet ist. Der Belüftungsring ist also entlang der Filtermembran im Bodenbereich des Filters angeordnet. Er kann durch die Druckluftquelle oder durch eine weitere getrennte Luftquelle mit Gas bzw. Luft versorgt werden und lässt dieses bzw. diese so in den ersten Bereich entweichen, dass es bzw. sie entlang der Filtermembran aufsteigen. Die aufsteigende Luft entwickelt Wirbel, die eine reinigende Wirkung auf die Filtermembran haben.

Vorzugsweise hat der Filter eine Steuerung, welche die Druckluftquelle derart steuert, dass die Luft in zeitlich beabstandeten Intervallen in den zweiten Bereich eingebracht wird. Da das Einbringen der Luft in den zweiten Bereich die momentane Effizienz des Filters senkt, ist es vorteilhaft, wenn die Druckluft nur in kurzen Intervallen mit längeren Abständen dazwischen eingebracht wird. So kann der Verschmutzung der Membran bei Aufrechterhaltung des Durchsatzes des Filters entgegen gewirkt werden.

Vorteilhaft ist es, wenn der Filter eine Absaugpumpe zur Erzeugung von Unterdruck im zweiten Bereich umfasst. Diese Absaugpumpe kann beispielsweise über den Filterablauf mit dem zweiten Bereich verbunden werden. Durch das Erzeugen des Unterdrucks wird die Förderleistung des Filters erhöht. Die genannte Steuerung kann derart ausgebildet sein, dass sie die Pumpe nur dann betreibt, wenn der Flüssigkeitsstand im Filter ein gewisses Level erreicht. Dieses Level kann vorteilhaft mittels mindestens einer Niveausonde bestimmt werden. Die Niveausonde ist mit der Steuerung verbunden, die den Flüssigkeitsstand im Filter bestimmt und je nach Stand ein Absaugintervall der Absaugpumpe startet. Vorzugsweise lässt sich mittels der mindestens einen Niveausonde auch bestimmen, wie viele Feststoffe sich bereits im Filter angesammelt haben. Zum Abführen dieser kann die Steuerung einen Restablauf ansteuern. Dieser Restablauf ist vorzugsweise in einem Bodenbereich des Filters angeordnet.

Es ist vorteilhaft, wenn der Filter Aufwuchskörper, insbesondere zur Aufnahme von Mikroorganismen, im ersten Bereich umfasst. Eine biologische Reinigung der durch den Flüssigkeitszulauf eingebrachten Flüssigkeit kann so gewährleistet werden.

Vorzugsweise umfasst der Filter einen Strömungskanal zum Bilden einer erhöhten Strömungsgeschwindigkeit entlang der Filtermembran im ersten Bereich. Vorzugsweise handelt es sich bei diesem Strömungskanal um eine Filterhaube, die mit einem Abstand um die Filtermembran ausgebildet ist, wobei die Filterhaube im Bodenbereich des Filters und/oder im Oberbereich der Filterhaube Öffnungen zum Einlass der Flüssigkeit aufweist. Der Strömungskanal ist also so angeordnet, dass ein möglichst schmaler Kanal im ersten Bereich entlang der Filtermembran entsteht. Tritt Flüssigkeit durch die Filtermembran aus dem ersten Bereich in den zweiten Bereich ein, so entsteht ein Unterdruck im ersten Bereich, der eine Zirkulation der Flüssigkeit im ersten Bereich, insbesondere im Strömungskanal, gewährleistet. Diese Zirkulation wirkt einem Ablagern von Feststoffen an der Filtermembran entgegen.

Die genannte Aufgabe wird auch durch einen Umbausatz für einen Filter mit einer Filtermembran, einem Flüssigkeitszulauf zum Einbringen von Flüssigkeit in den Filter und einem Filterablauf zum Abführen der durch die Filtermembran gereinigten Flüssigkeit gelöst, wobei die Filtermembran zwischen Flüssigkeitszulauf und Filterablauf angeordnet ist und einen ersten Bereich zwischen der Filtermembran und dem Flüssigkeitszulauf sowie einen zweiten Bereich zwischen dem Filterablauf und der Filtermembran definiert, wobei der Umbausatz einen in den Filterablauf einsetzbaren Anschluss, insbesondere ein Ventil, zum Einbringen von Druckluft in den zweiten Bereich umfasst.

Der zentrale Gedanke des Umbausatzes besteht also darin, dass an den bereits vorhandenen Filterablauf eines herkömmlichen Filters ein Anschluss eingesetzt wird, über den Druckluft in den zweiten Bereich eingebracht werden kann. Diese eingebrachte Druckluft dient, wie bereits erläutert, zur Reinigung der Filtermembran.

Vorzugsweise umfasst der Umbausatz eine mit dem Anschluss verbundene Druckquelle zum Einbringen von Druckluft in den zweiten Bereich. Diese Druckluftquelle kann zum Beispiel ein Druckluftgenerator sein. Es ist auch möglich, bereits vorhandene Druckluftquellen zu nutzen, um die Druckluft für den zweiten Bereich aufzubringen.

Vorzugsweise umfasst der Umbausatz eine Steuerung zum Steuern der Druckluftquelle und/oder des Ventils, wobei die Steuerung derart ausgebildet ist, dass in zeitlich beabstandeten Intervallen Druckluft in den zweiten Bereich eingebracht wird. Wie bereits geschildert, ist ein ständiges Einbringen von Druckluft in den zweiten Bereich nicht nötig und drückt die Effizienz der gesamten Filteranlage. Durch ein intervallweises Ansteuern der Druckluftquelle und/oder des Ventils kann die reinigende Wirkung mit einer geringen Beeinflussung der Effizienz des Filters erzielt werden.

Vorzugsweise ist die Steuerung derart ausgebildet, dass die Abstände zwischen den Intervallen größer als 30 Sekunden sind.

Vorzugsweise umfasst der Umbausatz eine Heizung zum Beheizen der Filtermembran. Diese Heizung kann ebenfalls von der Steuerung geregelt werden, und die Filtermembran derart beheizen, dass Bakterien in oder unmittelbar an der Filtermembran zerstört werden und Fette von der Filtermembran abgelöst werden.

Weiterhin wird die genannte Aufgabe durch ein Verfahren zum Filtern von Flüssigkeiten mit mindestens einem Filterzyklus und mindestens einem Reinigungszyklus dadurch gelöst, dass in dem Filterzyklus die zu filternde Flüssigkeit in einen ersten Bereich zwischen einem Flüssigkeitszulauf und einer Filtermembran eingebracht wird, die Filtermembran durchdringt und aus einem zweiten Bereich zwischen der Filtermembran und einem Filterablauf abgeführt wird, wobei in dem Reinigungszyklus Druckluft zur Reinigung der Filtermembran in den zweiten Bereich eingebracht wird.

Der zentrale Gedanke des Verfahrens besteht also darin, dass in dem Filterzyklus, wie bei herkömmlichen Geräten bekannt, Flüssigkeit aus dem ersten Bereich mittels der Membran gefiltert wird und in den zweiten Bereich eindringt. In dem Reinigungszyklus wird jedoch Druckluft in den zweiten Bereich gepresst, die entgegen der Flüssigkeitsflussrichtung durch die Membran in den ersten Bereich eindringt. Durch diesen Luftfluss durch die Filtermembran wird diese gereinigt.

Vorzugsweise wird im Filterzyklus mindestens ein Abschnitt der Filtermembran, insbesondere im ersten Bereich, im wesentlichen kontinuierlich mit Gas beströmt. Es wird also Luft am Fuß der Filtermembran eingebracht, die entlang der Filtermembran aufsteigt. Dies geschieht vorzugsweise im ersten Bereich und erfolgt kontinuierlich, das heißt während des gesamten Filterprozesses. Durch die ständig aufströmende Luft an der Filtermembran wird eine Verunreinigung dieser vermieden.

Vorzugsweise umfasst das Verfahren einen Entleerungszyklus, in dem die Flüssigkeit in dem ersten Bereich über einen Restablauf abgeführt wird. Im Filterzyklus sammeln sich mehr und mehr Festkörper und andere Verunreinigungen im ersten Bereich an. Sobald eine gewisse Konzentration dieser erreicht ist, wird die Effizienz des Filters beeinflusst. Zur Entsorgung der Festkörper wird in dem Entleerungszyklus zumindest ein Teil der im Filter befindenden Flüssigkeit mit der Verunreinigung über einen Restablauf abgelassen. Somit gewinnt der Filter wieder an Effizienz. Vorzugsweise wird im Entleerungszyklus vor dem Abführen der Flüssigkeit die Filtermembran zum Lösen von Fettrückständen beheizt. Durch das Beheizen der Filtermembran lösen sich die Fettrückstände in der Flüssigkeit des ersten Bereichs. Über den Restablauf können diese gelösten Fettrückstände dann entsorgt werden.

Vorzugsweise wird auch in dem Reinigungszyklus die Filtermembran zumindest zeitweise beheizt, um so Bakterien zu vernichten und/oder Fettrückstände zu lösen.

Für eine effiziente Durchführung des Reinigungszyklus und des Filterzyklus, sollten diese zeitlich getrennt voneinander durchgeführt werden. Da, wie bereits angesprochen, das Durchfluten der Filtermembran mit Luft die Effizienz des Filters reduziert, sollte diese Reinigung nur in kurzen Intervallen durchgeführt werden.

Nachfolgend wird die Erfindung anhand von mehreren Ausführungsbeispielen beschrieben, die mittels Abbildungen näher erläutert werden. Hierbei zeigen:
- - Fig. 1: einen Schnitt durch eine erste Ausführungsform eines erfindungsgemäßen Filters;
- - Fig. 2: einen Querschnitt durch den Filter aus Fig. 1;
- - Fig. 3: einen Schnitt durch eine zweiten Ausführungsform eines erfindungsgemäßen Filters;
- - Fig. 4: einen Querschnitt durch den Filter aus Fig. 3;
- - Fig. 5: eine Detailansicht des Belüftungsrings aus Fig. 3;
- - Fig. 6: ein Blockdiagramm einer Steuerung für einen erfindungsgemäßen Filter; und
- - Fig. 7: die schematische Darstellung eines Ablaufs.

In der nachfolgenden Beschreibung werden für gleiche und gleich wirkende Teile dieselben Bezugsziffern verwendet.

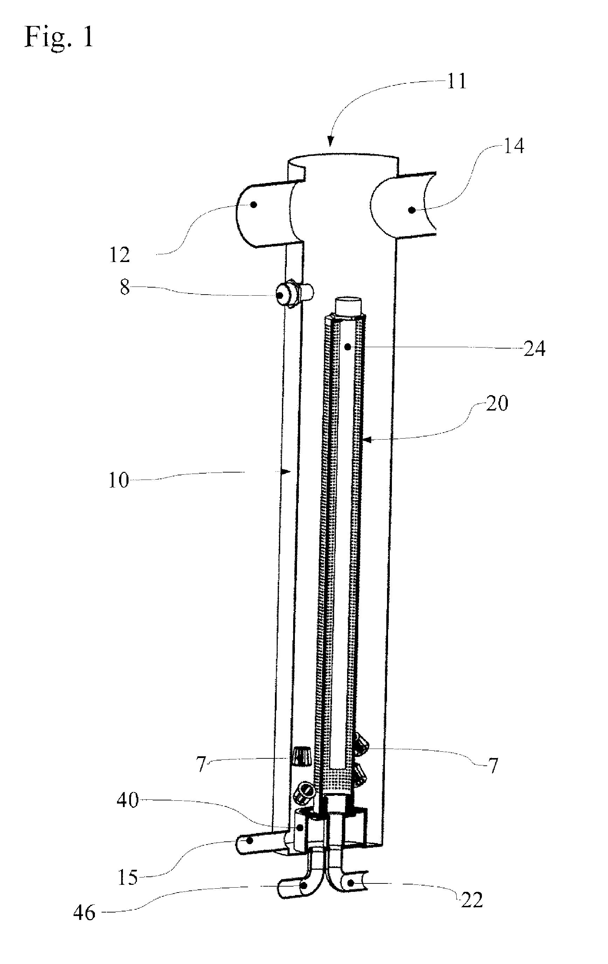

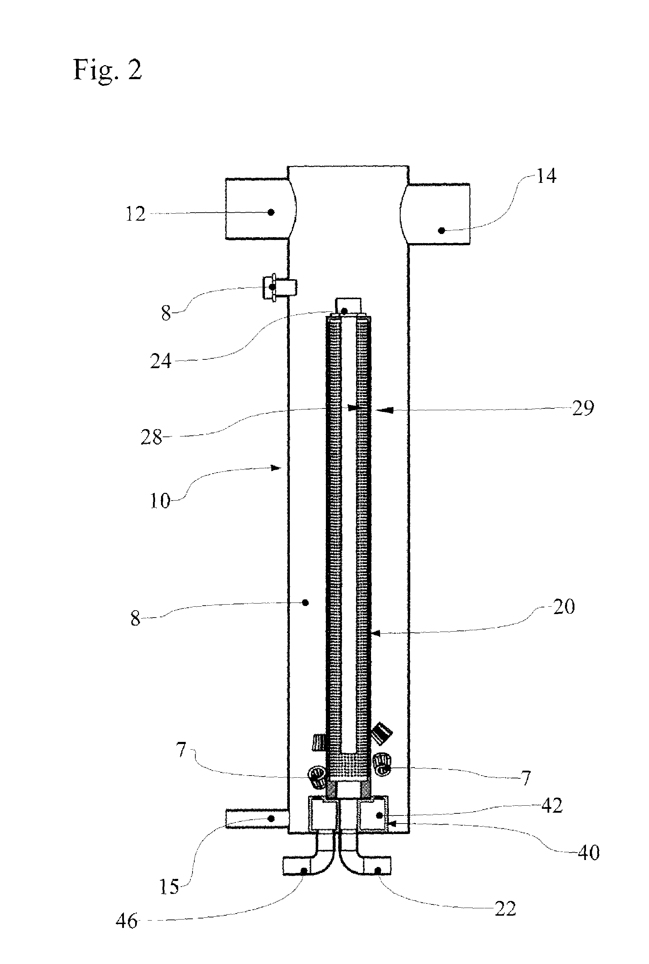

In einer ersten Ausführungsform umfasst der erfindungsgemäße Filter, wie in Fig. 1 und 2 dargestellt, einen Filterbehälter 10 bzw. ein Filtergehäuse, in dem das Innenleben des Filters eingebaut ist. Der Filterbehälter 10 hat eine im Wesentlichen zylindrische Form und verfügt über mehrere Einläufe und Abläufe. So befindet sich im oberen Bereich des Filterbehälters 10 ein Flüssigkeitszulauf, über den die zu filternde Flüssigkeit in einen Filterbehälterinnenraum 11 eingebracht wird. Der Flüssigkeitszulauf 12 kann entweder direkt an eine Abwasser erzeugende Vorrichtung angeschlossen sein oder die zu reinigende Flüssigkeit von einem Belebungsbecken beziehen, in dem bereits eine Vorbehandlung der Flüssigkeit durchgeführt wird. Dem Flüssigkeitszulauf 12 gegenüber liegend ist an dem Filterbehälter 10 ein Flüssigkeitsüberlauf 14 angebracht. Der Flüssigkeitsüberlauf 14 mündet leicht unterhalb des Flüssigkeitszulaufs 12 in den Filterbehälterinnenraum 11. Kann aus irgendeinem Grund der Filter nicht die gesamte Menge an zugeführter Flüssigkeit verarbeiten, d.h. reinigen, so steigt der Flüssigkeitspegel im Filterbehälterinnenraum 11 an und erreicht den Flüssigkeitsüberlauf 14. Mittels diesem wird die ungefilterte Flüssigkeit kontrolliert abgeführt. Sie kann zwischengelagert und zu einem späteren Zeitpunkt erneut über den Flüssigkeitszulauf 12 in den Filterbehälterinnenraum 11 eingebracht werden.

Im Normalfall bleibt der Flüssigkeitspegel im Filterbehälterinnenraum 14 jedoch unterhalb des Niveaus des Flüssigkeitsüberlaufs 14 und gelangt über die Filtermembran 26 der Filterkerze 20 zu einem im Bodenbereich des Filterbehälters 10 angeordneten Filterablaufs 22.

Die Filterkerze 20 bildet in ihrem Inneren im Filterbehälter 10 einen abgeschlossenen zweiten Bereich, aus dem das Filtrat über den Filterablauf 22 abgepumpt werden kann. Ein erster Bereich stellt der Bereich außerhalb der Filterkerze 20 im Filterbehälterinnenraum 11 dar. Die Filtermembran 26 bzw. die Filterkerze 20 weist, wie aus der Fig. 2 ersichtlich, einen Membraninnenwand 28, die den zweiten Bereich begrenzt, und eine Membranaußenwand 29 im ersten Bereich auf. Im Bodenbereich des Filterbehälters 10 befindet sich ebenfalls ein Restablauf 15, der in den ersten Bereich mündet. Dieser Restablauf 15 dient dazu, in einem Filterzyklus angesammelte Rückstände aus dem ersten Bereich abzuführen. Während des normalen Filterprozesses ist der Restablauf 15 verschlossen. Lediglich wenn der Festkörperanteil im ersten Bereich eine bestimmte Schwelle überschreitet, wird der Restablauf geöffnet, um die Flüssigkeit zusammen mit den Festkörpern im Filterbehälterinnenraum 11 über den Restablauf 15 abzuführen und somit zu entsorgen. Man spricht von einem Entleerungszyklus.

Der erste Bereich im Filterbehälterinnenraum 11 enthält Aufwuchskörper 7, die im gefüllten Zustand des Filterbehälterinnenraums 11 frei beweglich in der Flüssigkeit schwimmen. Die Aufwuchskörper 7 beheimaten Mikroorganismen, die einen biologischen Abbau des Abwassers gewährleisten. Somit bildet in dieser Ausführungsform der erste Bereich zumindest einen Teil des Belebungsbeckens aus.

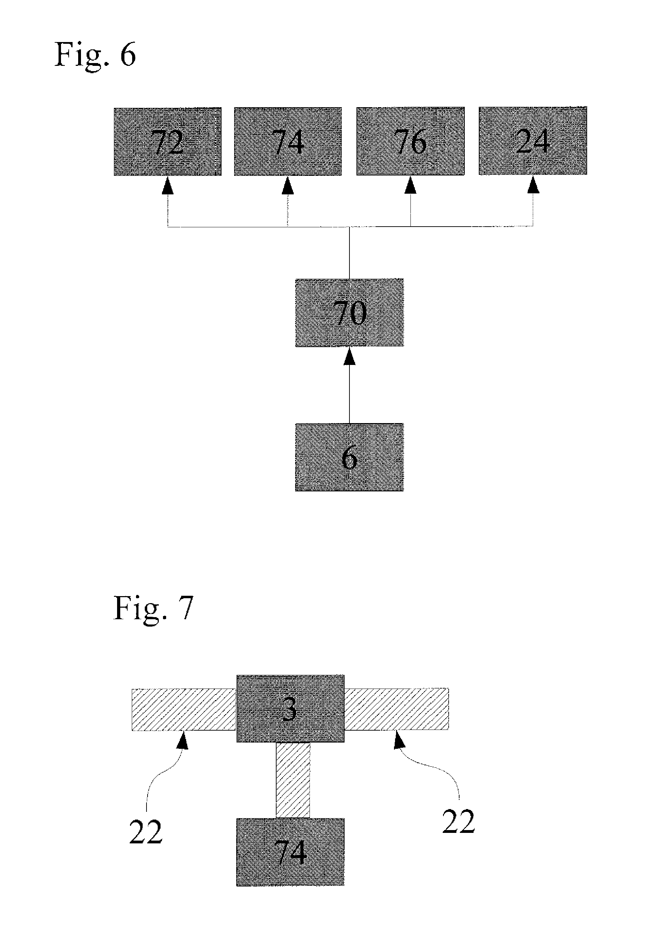

Knapp unterhalb des Flüssigkeitsüberlaufs 14 über der Filtermembran 26 befindet sich eine Niveausonde 8, mittels derer die Menge der sich im Filterbehälterinnenraum 11 befindlichen Flüssigkeit bestimmt werden kann. Erfindungsgemäß umfasst der Filter des Weiteren eine Steuerung 70 (vgl. Fig. 6), die die Messsignale der Niveausonde empfängt. Diese Steuerung 70 regelt eine Vielzahl von Aktuatoren, um den Betrieb des Filters sicherzustellen. Diese Aktuatoren umfassen eine Restablaufpumpe 72, die vorzugsweise über den Restablauf 15 Festkörper aus dem Filterbehälterinnenraum 11 entsorgt. Des Weiteren umfassen die Aktuatoren eine Absaugpumpe 76, die an den Filterablauf 22 angeschlossen ist und durch die Steuerung 70 betätigt einen Unterdruck im Innenraum der Filterkerze 20 erzeugt. Vorzugsweise wird die Absaugpumpe 76 nur dann gestartet, wenn die Flüssigkeit im Filterbehälterinnenraum 11 ein bestimmtes Niveau erreicht. Dieses Niveau kann die Steuerung 70, die die Betätigung der Absaugpumpe initiiert, mittels der Niveausonde 8 erfassen. Erfindungsgemäß kann die Absaugpumpe 76 nach dem Unterschreiten des Niveaus der Niveausonde 8 um einen vorbestimmten Zeitraum weiterbetrieben werden. Ein erneutes Starten der Absaugpumpe 76 erfolgt dann bei einem erneuten Erreichen des Niveaus der Niveausonde 8.

Alternativ können auch mehrere Niveausonden vorgesehen sein und der Stand der Flüssigkeit im Filterbehälterinnenraum 11 so geregelt werden, dass er sich beispielsweise zwischen einem ersten Niveau einer ersten Niveausonde und einem zweiten Niveau einer zweiten Niveausonde befindet.

Durch den Unterdruck der Absaugpumpe 76 erzeugten Unterdruck im Inneren der Filterkerze 20 kann der Durchsatz durch die Filtermembran 26 erhöht und somit die Effizienz des gesamten Filters gesteigert werden.

Weitere an die Steuerung angeschlossene Aktuatoren sind eine Heizung 24 und eine Druckluftquelle 74 (vgl. Fig. 6). Die Heizung 24 ist in den Fig. 1 und 2 stabförmig ausgebildet und erstreckt sich im Inneren der Filtermembran 26 entlang dieser. Die Steuerung 70 steuert die Heizung 24 derart, dass Bakterien in der Filtermembran 26 oder an der Membraninnenwand 28 oder Membranaußenwand 29 abgetötet werden. Durch das Beheizen der Filtermembran 26 werden ebenfalls Fettrückstände aus dieser ausgelöst. Um die Fettrückstände aus dem Filter zu entsorgen, erfolgt die durch die Steuerung 70 geregelte Beheizung der Filtermembran 26 gleichzeitig oder unmittelbar vor der Betätigung der Restablaufpumpe 72, also vor dem Entleerungszyklus.

Die Druckluftquelle 74 ist mit dem Filterablauf 22, wie in Fig. 7 gezeigt, über ein Ventil 3 verbunden. Wird die Druckluftquelle 74 durch die Steuerung 70 aktiviert, so strömt Druckluft durch den Filterablauf 22 in den zweiten Bereich bzw. in den Innenraum der Filterkerze 20. Das Ventil 3 verschließt den Filterablauf 22 so, dass die erzeugte Druckluft ausschließlich in den Filter geleitet wird. In diesem Reinigungszyklus werden Ablagerungen aus der Filtermembran gelöst.

Alternativ kann die Druckluftquelle 74 direkt ohne ein Ventil 3 an den Filterablauf 22 angeschlossen werden.

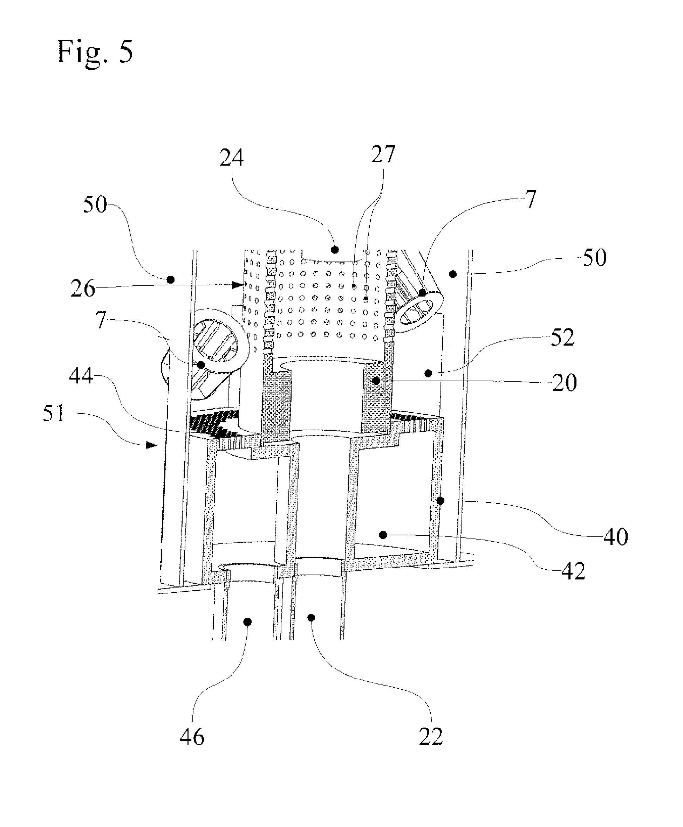

Wenn die Druckluftquelle 74 aktiviert ist, entsteht, wie bereits beschrieben, ein Überdruck, wodurch Luft aus dem zweiten Bereich durch die Filtermembran 26 in den ersten Bereich gedrückt wird. Verlegte Poren bzw. Filterlöcher 27 (vgl. Fig. 5) werden von ihren Ablagerungen befreit. Erfindungsgemäß wird zumindest zeitweise die Heizung 24 gleichzeitig mit der Druckluftquelle 74 betrieben. Somit werden in dem Reinigungszyklus Fettrückstände am effizientesten aus den Poren der Filtermembran 26 ausgelöst.

Die Steuerung 70 ist derart ausgebildet, dass die Druckluftquelle 74 lediglich für kurze Zeiträume betrieben wird, um den Durchsatz des Filters nicht über den Nutzen des Freiblasens der Filterporen hinaus zu beeinflussen.

Das Initiieren der Druckluftquelle 74 kann entweder nach einem festen Zeitplan geregelt sein oder durch weitere Sensoren bestimmt werden.

Beispielsweise kann der Grad der Verschmutzung der Filtermembran 26 über die benötigte Leistung der Absaugpumpe 76 beim Ansaugen des Filtrats bestimmt werden. Alternativ können indirekte Messungen, beispielsweise die Menge an zugeführter Flüssigkeit seit dem letzten Reinigungszyklus, den Regelmechanismus, den die Steuerung 70 zur Betreibung der Druckluftquelle 74 vorsieht, beeinflussen.

Des Weiteren befindet sich im Bodenbereich des Filterbehälterinnenraums 11 ein Belüftungsring 40. Dieser wird über eine Luftzufuhr 46, wie in Fig. 2 gezeigt, kontinuierlich mit Luft versorgt. Diese Luft gelangt in eine im Inneren des Belüftungsrings 40 angeordnete Belüftungskammer 42, die die Luft über die gesamte Breite der Filtermembran 26 verteilt und der Filtermembranaußenwand 29 benachbart abgibt.

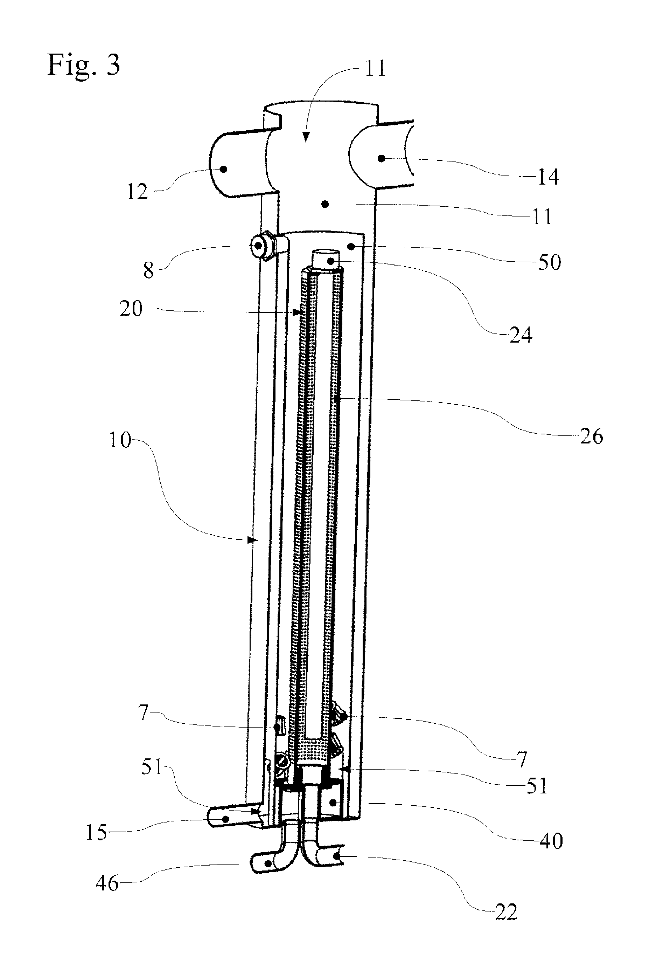

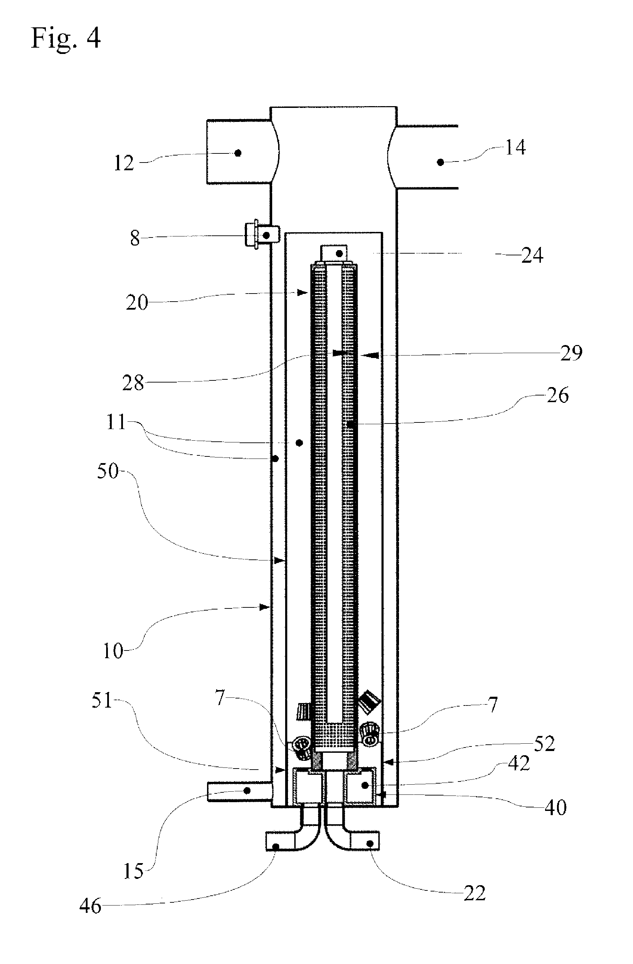

In einem zweiten Ausführungsbeispiel (vgl. Fig. 3 und 4) ist der Filter ähnlich wie der Filter aus Fig. 1 und 2 ausgebildet. Der Filterbehälter 10 beinhaltet die Filterkerze 20 und weist den Flüssigkeitszulauf 12, den Restablauf 15 und den Flüssigkeitsüberlauf 14 auf. Der Filterablauf 22 führt die Flüssigkeit aus dem Inneren der Filterkerze 20 ab. Die Flüssigkeit gelangt von dem Flüssigkeitszulauf 12 in den Filterbehälterinnenraum 11, durchdringt die Filtermembran 26 und wird dann als Filtrat durch den Filterablauf 22 abgeführt. Genau so wie die erste Ausführungsform des Filters sind auch hier Aufwuchskörper 7 und der Belüftungsring 40 vorgesehen.

Um die Strömungsgeschwindigkeit entlang der Membranaußenwand 29 zu erhöhen und somit Ablagerungen an der Membranaußenwand 29 zu vermeiden, umfasst der Filter eine Filterhaube 50, die sich zylinderförmig um die Filterkerze 20 erstreckt. Die Filterhaube unterteilt also mit ihrer Mantelfläche den Filterbehälterinnenraum 11 außerhalb der Filterkerze 10. Die Filterhaube 50 ist in ihrem oberen Bereich offen und setzt im unteren Bereich direkt an einer Bodenplatte des Filters an. Nahe dem Fußbereich des Filters an den Seiten der Filterhaube 50 befindet sich eine erste Haubenöffnung 51 und eine zweite Haubenöffnung 52. Die Flüssigkeit gelangt also über den Flüssigkeitszulauf 12 in den Filterbehälterinnenraum 11 und von dort über eine der beiden Haubenöffnungen 51, 52 ins Innere der Filterhaube 50. Die Flüssigkeit kann auch über die Öffnung am oberen Ende der Filterhaube 50 ins Innere der Filterhaube 50 gelangen. Über den Zwischenraum der sich zwischen der Filterhaube 50 und der Filterkerze 20 entlang der Längsrichtung der Filtermembran 26 erstreckt, kann die Flüssigkeit dann in das Innere der Filterkerze 20 gelangen. Durch diese Führung der Flüssigkeit durch die Filterhaube 50 wird die Strömungsgeschwindigkeit entlang der Filtermembran 26 erhöht.

Alternativ kann die Filterhaube 50 an ihrem oberen Ende geschlossen sein. Dies hat Vorteile, wenn mittels der Absaugpumpe 76 Flüssigkeit aus dem Filter abgesaugt wird. Da die Filterhaube 50 lediglich im Bodenbereich des Filters geöffnet ist, befindet sich die Filtermembran 26 beim Absaugen vollständig unter Wasser, bis ein Großteil der Flüssigkeit aus dem Filterbehälterinnenraum 11 abgeführt wurde.

Die Filterhaube 50 kann auch so konzipiert sein, dass sie einen Großteil des Filterinnenlebens aufnimmt. Somit ist es möglich, lediglich durch das Einsetzen einer neuen Filterhaube 50 in einen Filterbehälter 10 diesen gemäß der Erfindung aufzurüsten bzw. umzubauen.

Eine Detailansicht des unteren Bereichs der Filterhaube 50 lässt sich der Fig. 5 entnehmen. Der Belüftungsring 40, der am Boden des Filterbehälters 10 (vgl. Fig. 3, 4) angeordnet ist, wird über die Luftzufuhr 46 mit Luft befüllt. Der Belüftungsring 40 erstreckt sich ringförmig um den Filterablauf 22, der mittig in dem Filterbehälter 10 angeordnet ist und das Filtrat aus der Filterkerze 20 abzieht, wobei die Filterkerze 20 im Wesentlichen eine Verlängerung des Filterablaufs 22 bildet und oben auf dem Belüftungsring 40 aufsitzt. Eine Belüftungskammer 42 des Belüftungsrings 40 umfasst an ihrer Oberseite der Filterkerze 20, insbesondere der Filtermembran 26 zugewandte Belüftungsöffnungen 44, über die die Luft aus der Belüftungskammer 42 abgegeben wird und entlang der Filtermembran 26 aufsteigt. So wird ein Verlegen der Filterlöcher 27 in der Filtermembran 26 vermieden.

Den Belüftungsring 40 und die Filterkerze 20 umgibt die Filterhaube 40, die ebenfalls am Boden des Filterbehälters 10 angebracht ist. Im Zwischenraum zwischen der Filterkerze 20 und der Filterhaube 50 schwimmen die Aufwuchskörper 7. Die zu reinigende Flüssigkeit tritt, wie beschrieben, über die erste und zweite Haubenöffnung 51, 52 im unteren Abschnitt der Filterhaube 50 ein.

Nicht nur das Innenleben des Ventils kann als Umbausatz bereit gestellt werden, sondern auch die Luftversorgung für den zweiten Bereich, also für den Innenbereich der Filterkerze 20. Es muss hierfür lediglich ein Ventil 3 und eine Druckluftquelle 74 an den Filterablauf 22 angeschlossen werden.

### Bezugszeichenliste

- 3: Ventil
- 7: Aufwuchskörper
- 8: Niveausonde
- 10: Filterbehälter
- 11: Filterinnenraum
- 12: Flüssigkeitszulauf
- 14: Flüssigkeitsüberlauf
- 15: Restablauf

- 20: Filterkerze
- 22: Filterablauf
- 24: Heizung
- 26: Filtermembran
- 27: Filterlöcher
- 28: Membraninnenwand
- 29: Membranaußenwand

- 40: Belüftungsring
- 42: Belüftungskammer
- 44: Belüftungsöffnungen
- 46: Luftzulauf

- 50: Filterhaube
- 51: erste Haubenöffnung
- 52: zweite Haubenöffnung

- 70: Steuerung
- 72: Restablaufpumpe
- 74: Druckluftquelle
- 76: Absaugpumpe

## Patentansprüche

1. Filter, umfassend
eine Filtermembran (26),
einen Flüssigkeitszulauf (12) zum Einbringen von Flüssigkeit in den Filter,
einen Filterablauf (22) zum Abführen der durch die Filtermembran (26) gereinigten Flüssigkeit und
eine Druckluftquelle (74),
wobei die Filtermembran (26) zwischen Flüssigkeitszulauf (12) und Filterablauf (22) angeordnet ist und einen erster Bereich zwischen dem Flüssigkeitszulauf (12) und der Filtermembran (26) sowie ein zweiter Bereich zwischen dem Filterablauf (22) und der Filtermembran (26) definiert,
**dadurch gekennzeichnet, dass**
die Druckluftquelle (74) derart mit dem zweiten Bereich verbunden ist, dass Druckluft zur Reinigung der Filtermembran (26) in den zweiten Bereich einbrinbar ist.

2. Filter nach Anspruch 1,
**dadurch gekennzeichnet, dass**
der Filterablauf (22) einen Anschluss, insbesondere ein Ventil (3), zum Einbringen der Luft in den zweiten Bereich aufweist.

3. Filter nach einem der vorhergehenden Ansprüche,
**gekennzeichnet durch**
eine Heizung (24), die der Filtermembran (26) benachbart angeordnet ist.

4. Filter nach einem der vorhergehenden Ansprüche, insbesondere nach Anspruch 3,
**dadurch gekennzeichnet, dass**
die Heizung (24) einen Heizstab umfasst und die Filtermembran (26) im Wesentlichen den Heizstab umgebend, insbesondere zylindrisch, ausgebildet ist.

5. Filter nach einem der vorhergehenden Ansprüche,
**gekennzeichnet durch**
eine im Wesentlichen, bis auf den Filterablauf (22), geschlossene Filterkerze zur Aufnahme der Filtermembran (26) im Innenraum des Filters.

6. Filter nach einem der vorhergehenden Ansprüche,
**gekennzeichnet durch**
einen Belüftungsring (40), der zum Anströmen der Filtermembran (26), insbesondere einer Membranaußenwand (29), mit Luft im ersten Bereich (29) angeordnet ist.

7. Filter nach einem der vorhergehenden Ansprüche,
**gekennzeichnet durch**
eine Steuerung (70), welche die Druckluftquelle (74) derart steuert, dass Luft in zeitlich beabstandeten Intervallen in den zweiten Bereich eingebracht wird.

8. Filter nach einem der vorhergehenden Ansprüche,
**gekennzeichnet durch**
eine Absaugpumpe (76) zur Erzeugung von Unterdruck im zweiten Bereich.

9. Filter nach einem der vorhergehenden Ansprüche,
**gekennzeichnet durch**
mindestens eine Niveausonde (8).

10. Filter nach einem der vorhergehenden Ansprüche,
**gekennzeichnet durch**
einen Restablauf (15), der in einem Bodenbereich des Filters zum Abführen von Feststoffen angeordnet ist.

11. Filter nach einem der vorhergehenden Ansprüche,
**gekennzeichnet durch**
Aufwuchskörper (7), insbesondere zur Aufnahme von Mikroorganismen, im ersten Bereich.

12. Filter nach einem der vorhergehenden Ansprüche,
**gekennzeichnet durch**
einen Strömungskanal zum Bilden einer erhöhten Strömungsgeschwindigkeit entlang der Filtermembran (26) im ersten Bereich.

13. Filter nach einem der vorhergehenden Ansprüche, insbesondere nach Anspruch 12,
**dadurch gekennzeichnet, dass**
der Strömungskanal eine Filterhaube (50) umfasst, die mit einem Abstand um die Filtermembran (26) ausgebildet ist, wobei die Filterhaube (50) im Bodenbereich des Filters und/oder im Oberbereich der Filterhaube (50) Öffnungen (51, 52) zum Einlass der Flüssigkeit aufweist.

14. Umbausatz für einen Filter mit
einer Filtermembran (26),
einem Flüssigkeitszulauf (12) zum Einbringen von Flüssigkeit in den Filter und einem Filterablauf (22) zum Abführen der durch die Filtermembran (26) gereinigten Flüssigkeit,
wobei die Filtermembran (26) zwischen Flüssigkeitszulauf (12) und Filterablauf (22) angeordnet ist und einen erster Bereich zwischen der Filtermembran (26) und dem Flüssigkeitszulauf (12) sowie einen zweiter Bereich zwischen dem Filterablauf (22) und der Filtermembran (26) definiert,
wobei der Umbausatz einen in den Filterablauf (22) einsetzbaren Anschluss, insbesondere ein Ventil (3), zum Einbringen von Druckluft in den zweiten Bereich umfasst.

15. Umbausatz nach Anspruch 14,
**gekennzeichnet durch**
eine mit dem Anschluss verbundene Druckluftquelle (74) zum Einbringen von Druckluft in den zweiten Bereich.

16. Umbausatz nach Anspruch 14 oder 15, insbesondere nach Anspruch 14,
**gekennzeichnet durch**
eine Steuerung (70) zum Steuern der Druckluftquelles (74) und/oder des Ventils (3), wobei die Steuerung derart ausgebildet ist, dass in zeitlich beabstandeten Intervallen Druckluft in den zweiten Bereich eingebracht wird.

17. Umbausatz nach Anspruch 16,
**gekennzeichnet durch**
die Steuerung (70) derart ausgebildet ist, dass
die Abstände zwischen den Intervallen größer als 30 Sekunden sind.

18. Umbausatz nach einem der Ansprüche 14 bis 17,
**gekennzeichnet durch**
eine Heizung (24) zum Beheizen der Filtermembran (26).

19. Verfahren zum Filtern von Flüssigkeit mit mindestens einem Filterzyklus und mindestens einem Reinigungszyklus,
wobei in dem Filterzyklus die zu filternde Flüssigkeit in einen ersten Bereich zwischen einem Flüssigkeitszulauf (12) und einer Filtermembran (26) eingebracht wird, die Filtermembran (26) durchdringt und aus einem zweiten Bereich zwischen der Filtermembran (26) und einem Filterablauf (22) abgeführt wird,
**dadurch gekennzeichnet, dass**
wobei in dem Reinigungszyklus Druckluft zur Reinigung der Filtermembran (26) in den zweiten Bereich eingebracht wird.

20. Verfahren nach Anspruch 19,
**dadurch gekennzeichnet, dass**
im Filterzyklus mindestens ein Abschnitt der Filtermembran (26), insbesondere einer Membranaußenwand (29), im Wesentlichen kontinuierlich mit Gas beströmt wird.

21. Verfahren nach Anspruch 19 oder 20,
**gekennzeichnet durch**
einen Entleerungszyklus, in dem die Flüssigkeit in dem ersten Bereich über einen Restablauf abgeführt wird.

22. Verfahren nach Anspruch 21,
**dadurch gekennzeichnet, dass**
im Entleerungszyklus vor dem Abführen der Flüssigkeit die Filtermembran (26) zum Lösen von Fettrückständen beheizt wird.

23. Verfahren nach einem der Ansprüche 19 bis 22,
**dadurch gekennzeichnet, dass**
der Reinigungszyklus ein Beheizen der Filtermembran (26) zur Vernichtung von Bakterien und/oder zum Lösen von Fettrückständen umfasst.

24. Verfahren nach einem der Ansprüche 19 bis 23,
**dadurch gekennzeichnet, dass**
der Reinigungszyklus zeitlich getrennt von dem Filterzyklus durchgeführt wird.
